Europäisches Patentamt

**European Patent Office**

Office européen des brevets

(19)

(11) Publication number: **0 116 765**
A1

# EUROPEAN PATENT APPLICATION

(21) Application number: **83307629.2**

(22) Date of filing: **15.12.83**

(51) Int. Cl.³: **G 01 N 29/00**
//G01N17/00, G01H1/00

(30) Priority: **17.12.82 GB 8235959**

(43) Date of publication of application:
**29.08.84** Bulletin **84/35**

(84) Designated Contracting States:
**BE DE FR IT NL**

(71) Applicant: **British Gas Corporation**
**Rivermill House 152 Grosvenor Road**
**London SW1V 3JL(GB)**

(72) Inventor: **Condello, C.**
**5 Field Close**
**Chessington Surrey KT9 2QD(GB)**

(74) Representative: **Morgan, David James**
**British Gas Corporation Patents Department 326 High**
**Holborn**
**London WC1V 7PT(GB)**

(54) Corrosion detection method.

(57) The present invention relates to the detection of corrosion in a material, particularly a metallic material and specifically when the metallic material is covered in a protective film of, for example, paint.

The inventive involves sensing the material, such as a ferrous material which is paint coated, for energy emission and detecting energy emission characteristic of corrosion induced fracture.

A system is provided for this purpose, the system comprising a transducer 1 for sensing the energy emission as ultrasonic signals and translating the ultrasonic signals into voltage signal analogues therefor, a signal detector unit 2 for detecting the signals resulting from the corrosion induced energy emission and a signal processing unit 3 for processing the detected signal as the quantity V²sec.

Measurement of the frequency and amplitude of the signals can establish whether corrosion is occuring as well as the identity of the corrosion product being formed.

Measurement of V² sec can establish the total quantity of corrosion which has occurred as well as its current rate.

*FIG.1A.*

FIG. 1B.

SIGNAL
PROCESSING
UNIT

| LOW PASS FILTER | —17 |
| MULTIPLIER | —18 |
| SIGNAL AVERAGER | —19 |
| AMPLITUDE THRESHOLD DETECTOR | —20 |

CLOCK

21
22

VOLTAGE CONTROLLED OSCILLATOR

COUNTER —23

MULTIPLEXER —24

DISPLAY   DISPLAY   DISPLAY
25        26        27

## Corrosion Detection Method

The present invention relates to the detection of corrosion in a material particularly a metallic material and specifically when the metallic material is covered in a protective film of, for example, paint.

It is known that if a metallic material is put under stress as a result of mechanical loading, there may occur both within the material and externally thereof continuing structural changes characteristic of fracture even though the material does not fail.

As the material undergoes this fracture it emits energy in the form of so-called "stress waves", for instance Rayleigh waves. The detection of the energy in the form of stress waves provides a useful technique for indicating that such fracture is occurring when it is impossible or impractical to detect these structural changes in any other way.

The present invention is based on the surprising and unexpected discovery made by the applicants that as a material such as a metal corrodes it also emits energy which is in the form of barely perceptible stress waves of a character similar to those produced by mechanical fracture.

According therefore to one aspect of the present invention there is provided a method for the detection of corrosion in a material, the method comprising sensing the material for energy emission and detecting energy emission characteristic of corrosion fracture.

According to another aspect of the present invention there is provided apparatus for the detection of corrosion in a material, the apparatus comprising a system for sensing the material for energy emission and detecting energy emission characteristic of corrosion fracture.

It is postulated by the applicants that the emitted energy results from the continuous rupture of the corrosion deposit continuously forming on the surface of the material. In the case of most metallic materials eg. ferrous materials, the deposit usually comprises several adjacent layers of a metallic oxide. The layers take the form of an onion skin with new layers pushing older layers away from the metal surface. At some stage in this process, the force exerted by the recently formed new layers is sufficient to rupture one or more older layers giving rise to a burst of energy which can characterise both the corrosion process and indeed the chemical nature of the layer which is fracturing. These energy bursts are a continuous phenomenon and occur so long as the corrosion process continues. They give rise to stress waves which the applicants have found are reproduced as ultrasonic signals.

Accordingly therefore the energy emission can be detected as ultrasonic signals and by translating these signals into electrical signal analogues thereof and analysing the electrical signals, those resulting from corrosion induced energy emission can be detected.

Preferably the electrical signals are voltage signals. The applicants have discovered that the signals resulting from corrosion induced energy emission have frequency characteristics which are characteristic of corrosion.

Accordingly the electrical signals can be filtered to detect those of a frequency characteristic of corrosion induced energy emission. The appropriate frequency can of course be established from prior calibration tests on material of similar composition and in which corrosion is deliberately induced to occur.

While the signal frequency characteristic forms one reliable means for detecting corrosion, the applicants believe that in order to establish the existence of corrosion induced energy emission beyond reasonable doubt, the amplitude of the signals must also be established as this too provides another means for detecting corrosion.

Accordingly the electrical signals are preferably further filtered, after frequency filtering, to detect those of an amplitude characteristic of corrosion induced energy emission.

Here again the appropriate amplitude can of course be established from prior calibration tests on material of similar composition in which corrosion is deliberately induced to occur.

It can be shown mathematically that the energy emitted as a burst during the fracture of one or more corrosion layers is proportional to $V^2$ sec where V is the total signal voltage produced electrically by the burst during its duration.

If the quantity $V^2$ sec is measured at constant amplification, it can be used to measure the total amount of corrosion product which has formed on the material and also the present rate at which corrosion is occurring. This technique will be explained subsequently.

An embodiment of the invention will now be particularly described with reference to the accompanying drawings in which:-

Figure 1A and 1B are a schematic layout of a system for detecting corrosion in a ferrous material such as wrought iron coated in paint,

Figure 2 shows schematically the sequence in which the ultrasonic signals are processed in the system,

Figure 3 is a laboratory derived calibration curve of oxide mass against corrosion time for wrought iron corroding in an aqueous environment at ambient temperature,

Figure 4 is a laboratory derived calibration curve of $V^2$ sec against time obtained simultaneously with the curve shown in Figure 3 and

Figure 5 is a hypothetical calibration curve of oxide mass against corrosion time for a metallic material corroding in an ambient environment.

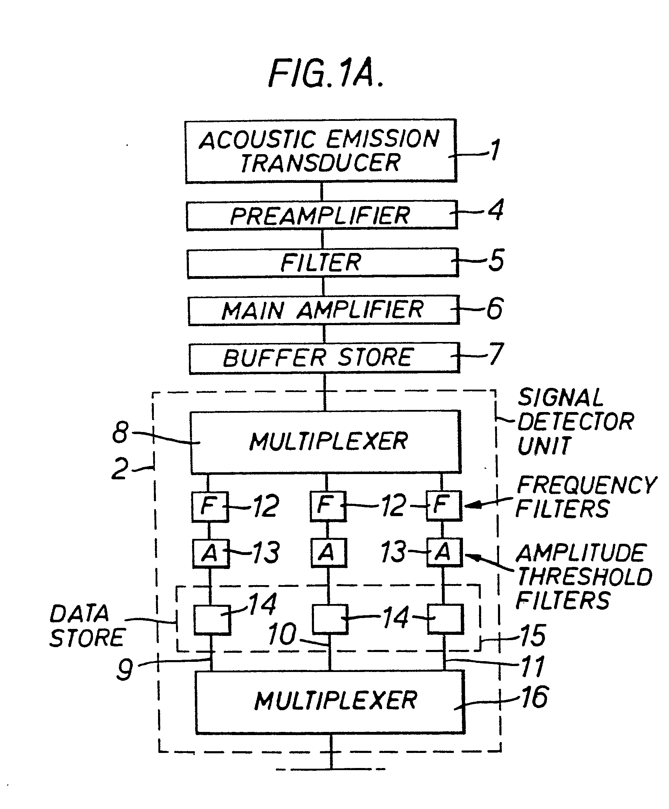

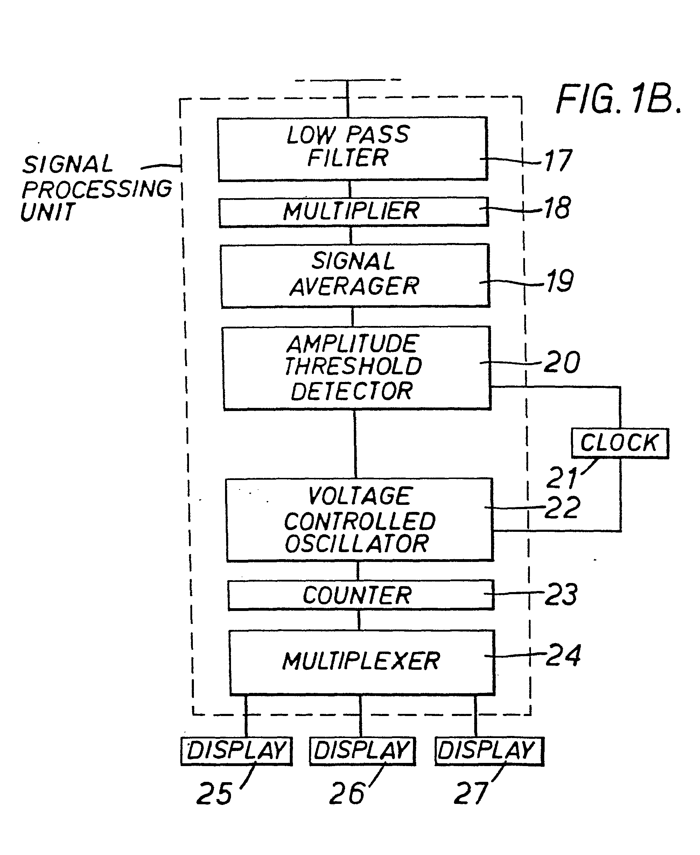

The system shown in Figure 1A and 1B not only enables the operator to determine whether corrosion is occurring under the paint layer but also to determine the chemical identity of the iron oxide. Laboratory tests have been conducted to establish the frequency range of the ultrasonic signals resulting from the corrosion fracture of pure haematite ($Fe_2O_3$) and magnetite ($Fe_3O_4$). In addition, using a constant amplification factor of 94dB the amplitude range in volts of the signals resulting from the formation of these iron oxide products has also been established. Tests have also been conducted to establish the corresponding data for the degradation of oil-based paint.

Laboratory tests have also been performed to establish the quantity $V^2$ sec per unit mass for $Fe_2O_3$, $Fe_3O_4$ and oil based paint at a constant amplification of 94dB.

The results of the tests are shown in the Table.

Referring to Figure 1A and 1B the system comprises a transducer 1 for sensing ultrasonic signals resulting from corrosion induced energy emission and translating the ultrasonic signals into voltage signal analogues thereof, a signal detecter unit 2 for detecting the signals resulting from the corrosion induced energy emission and a signal processing unit 3 for processing the detected signal as the quantity $V^2$ sec.

The transducer 1 is of the piezoelectric or capacitive type and is coupled to the material under test by an acoustic couplant.

Ultrasonic signals received by the transducer 1 are translated into voltage analogue signals which are preamplified by 40dB in the preamplifier 4. The signals are then filtered by a high pass filter 5 to remove low frequency noise.

The filtered signals are then amplified by a further 54dB in the main amplifier 6 so that the overall

amplification is 94dB.

The signals are then stored in a buffer store 7 until required for further processing.

The signals reaching the buffer store will mainly comprise those due to the formation of $Fe_2O_3$ and those which result from the degradation of paint itself. There may also be some signals due to the formation of $Fe_3O_4$ but these will be negligible unless the corrosion is occurring at high temperatures.

The signal detector unit 2 receives the signals sequentially from the buffer store 7 and a three channel output multiplexer 8 routes the signals in sequence to a three channel analyser comprising an $Fe_2O_3$ signal channel 9, an $Fe_3O_4$ signal channel 10 and a paint degradation signal channel 11. Each channel comprises frequency filters 12 and amplitude threshold detectors 13 in series, to select only those signals of the permitted frequency and amplitude range corresponding to the corrosion products to be identified. These ranges are shown in the Table as previously mentioned.

Each channel also comprises a separate location 14 in a data store 15, such as a microprocessor, to which the signals pass after filtering.

The signals pass from the store 15 along the channels

8 `0116765`

to the input of a three channel-input multiplexer 16. The signal outputs are supplied to the signal processing unit 3 shown in Figure 1B.

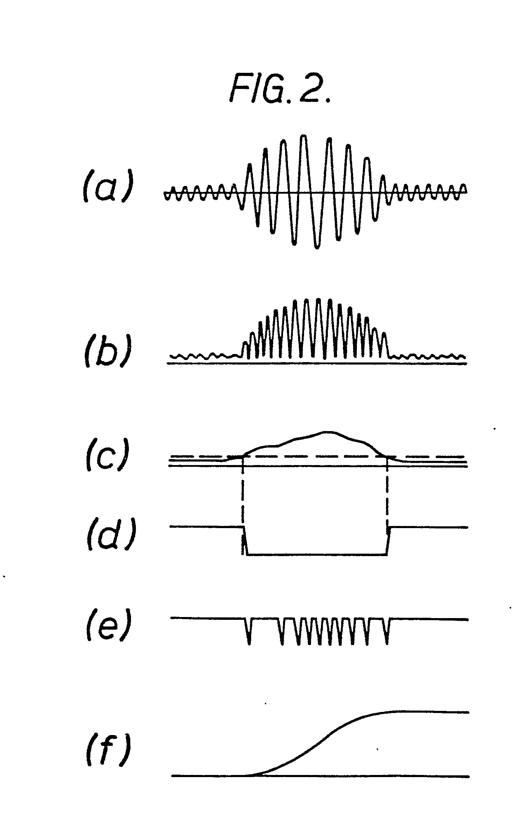

The signal processing unit 3 receives the signals as bursts somewhat in the form shown in Figure 2(a). These signals are filtered by a low pass filter 17 to remove background noise.

The signals are then multiplied to the power $V^2$ (where V is the signal amplitude in volts) by a multiplier 18. After this step, the signal-burst takes a form somewhat similar to that shown in Figure 2(b).

The signal peaks are then averaged by a signal averager 19 and amplitude thresholded by an amplitude threshold detector 20. The signal burst now takes a form similar to that shown in Figure 2(c) above the dotted threshold line.

The signal is then employed to start a clock 21 when the preset threshold is reached and similarly the clock 21 is stopped when the signal falls below the preset thresold level as shown in Figure 2(d).

The thresholded signal 2(c) is also used to drive a voltage controlled oscillator 22 that generates negative- going ramp pulses equivalent to the duration of the thresholded signal. Typical pulses are shown in Figure 2(e).

These pulses 2(e) are counted by a counter 23 in unit time to provide a value $V^2$ sec which is proportional to the energy of each signal.

The counted pulses are then routed by a three channel output multiplexer 24 to displays 25,26,27 corresponding to the signals respectively resulting from energy emission due to the formation of $Fe_2O_3$ and $Fe_3O_4$ and the degradation of paint.

The multiplexers 16 and 24 are synchronised so that the appropriate signals are routed to the correct display.

The displays provide a direct read out of $V^2$ sec.

Alternatively the threshold voltage in Figure 2(c) can be integrated during the time of the signal burst to provide a curve similar to that in Figure 2(f). The area occupied by the curve is a direct representation of $V^2$ sec.

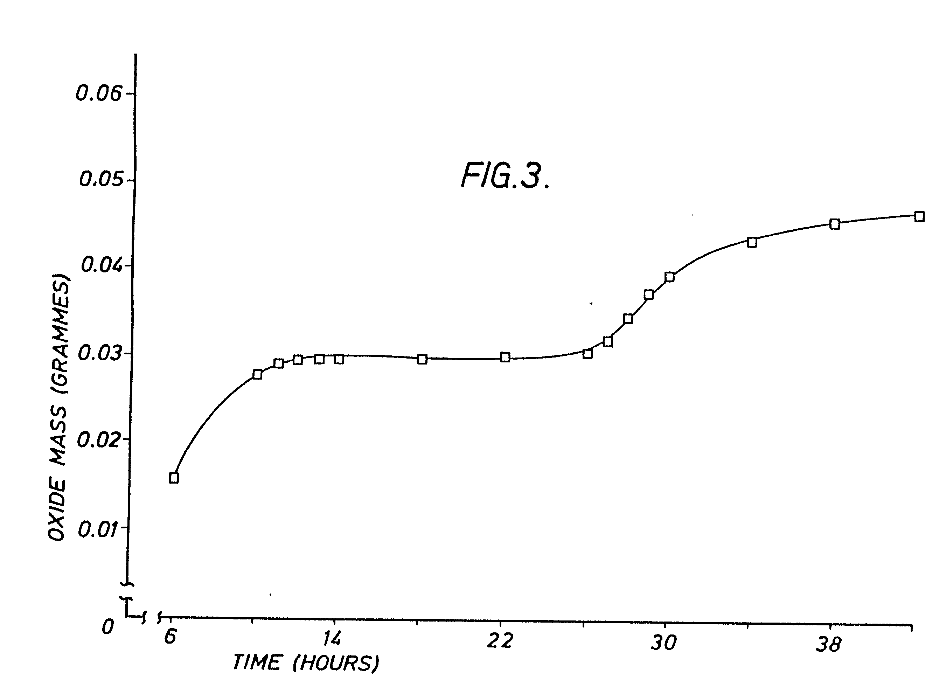

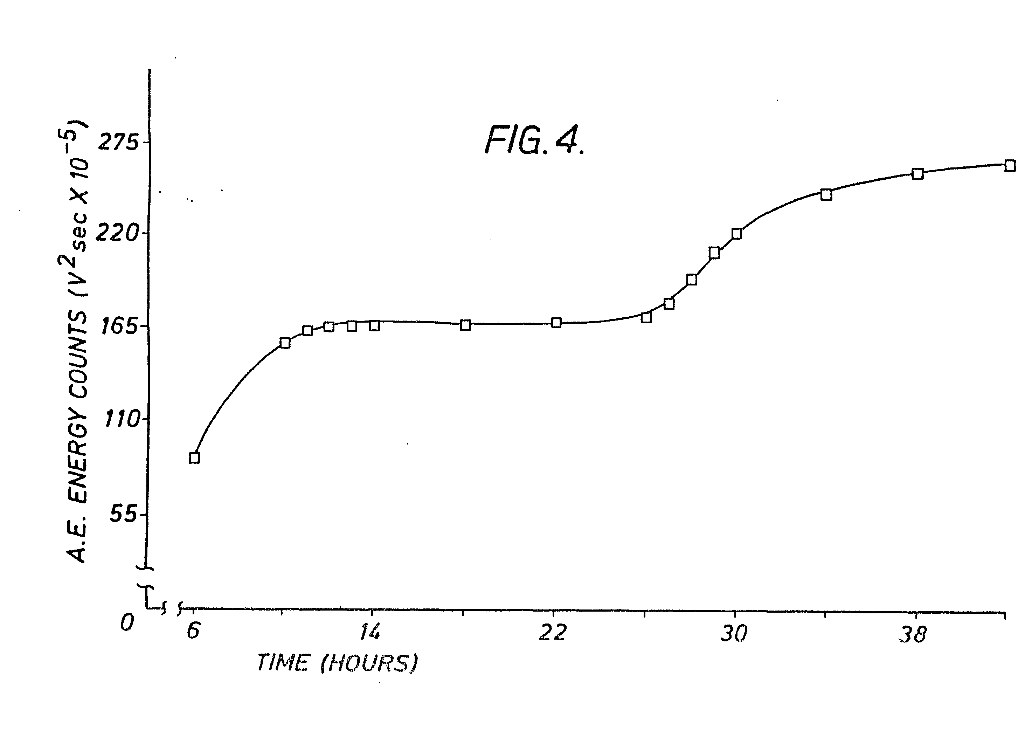

The curves shown in Figures 3 and 4 were derived using a specimen of wrought iron initially with a clean oxide-free surface. These curves show that the expression $V^2$ sec is proportional to the amount of oxide formed during the corrosion process by an equation of the type $V^2$ sec $= K_1 + K_2 X$ oxide mass where $K_1$ and $K_2$ are constants. This relationship has been found by the applicants to be valid for other ferrous samples eg. mild steel. In fact it is postulated by the applicants that such a relationship exists at least for all metallic materials. Consequently if these curves have been previously obtained for a material under test, then if $V^2$ sec is measured it is possible to determine the total quantity of the oxide corrosion product formed within a period covered by the curve. In addition by measuring $V^2$ sec over a period it is possible by referring to the curves to determine at what rate corrosion is occurring.

The above techniques are only feasible where the corrosion has occurred over the relatively short period during which the calibration curves have been prepared.

Where corrosion has occurred for a number of months or even years the above techniques are not feasible since it would be impractical to formulate such curves over such long periods.

Nevertheless measurement of both the total amount of oxide which has formed during the corrosion process and of the present corrosion rate is still possible.

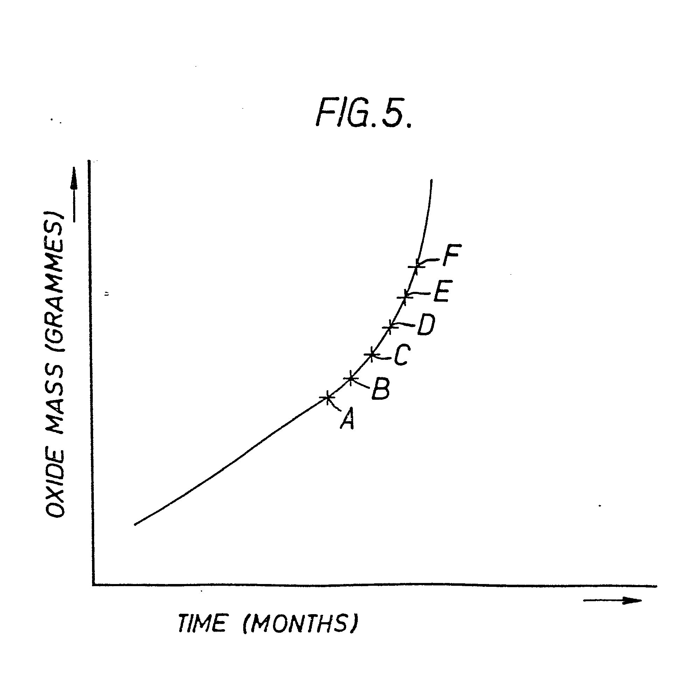

In this case it is necessary first to prepare a curve of the sort shown in Figure 5. The values are obtained from tables which are available for a wide range of materials for specified corrosion conditions. Once this type of curve is available, measurement of $V^2$ sec is made at various time intervals and on a number of occasions say six or more. These intervals could be weekly intervals.

An attempt is then made to fit these points A to F onto the curve shown in Figure 5.

It is possible to determine from the last point F on the curve the total mass of oxide which has formed and from the slope of the curve the present corrosion rate.

The invention provides a technique for detecting the corrosion of a metal such as steel or iron under a protective paint film without the necessity to remove the film. The invention also enables the amount of corrosion to be estimated as well as the rate at which it is occurring to be determined.

| MATERIAL | AMPLITUDE RANGE (V) | FREQUENCY RANGE (KHz) | ACOUSTIC EMISSION SIGNAL PER UNIT MASS IN $V^2$ Sec. |
|---|---|---|---|
| $Fe_3O_4$ | 0.5-4 mostly 4v | 350-500 | $8.1 \times 10^{-2}$ |
| $Fe_2O_3$ | 0.5-1 | 40-90 | $5.5 \times 10^{-2}$ |
| PAINT (oil) | 0.5-1 mostly 0.5v | 100-250 | $3.19 \times 10^{-2}$ |

Table 1. Data obtained from Stress Wave Analysis

CLAIMS

1.    A method for the detection of corrosion in a material the method comprising sensing the material for energy emission and detecting energy emission characteristic of corrosion fracture.

2.    A method as claimed in claim 1 in which the energy emission is sensed as ultrasonic signals, the ultrasonic signals are translated into electrical signal analogues thereof and the electrical signals are analysed to detect those resulting from corrosion induced energy emission.

3.    A method as claimed in claim 2 in which the electrical signals are voltage signals.

4.    A method as claimed in claim 2 or claim 3 in which the analysis comprises filtering the signals to detect those of a frequency characteristic of corrosion induced energy emission.

5.    A method as claimed in claim 4 in which the analysis comprises further filtering the signals to detect those of an amplitude characteristic of corrosion induced energy emission.

6.    A method as claimed in claim 5 in which the filtered

2

voltage signals are processed to provide a quantity $V^2$ sec where V is the total signal voltage for its duration in seconds.

7.    Apparatus for the detection of corrosion in a material, the apparatus comprising a system for sensing the material for energy emission and detecting energy emission characteristic of corrosion fracture.

8.    Apparatus as claimed in claim 7 in which the system comprises a sensor for sensing the energy emission as ultrasonic signals and translating the ultrasonic signals into electrical signal analogues thereof and a signal analyser for analysing the electrical signals to detect those resulting from corrosion energy emission.

9.    Apparatus as claimed in claim 8 in which the sensor translates the ultrasonic signals into voltage signal analogues.

10.    Apparatus as claimed in claim 8 or claim 9 in which the signal analyser comprises means for filtering the signals to detect those of a frequency characteristic of corrosion induced energy emission.

11.    Apparatus as claimed in claim 10 in which the signal filtering means is adapted to further filter the signals to detect those of an amplitude characteristic of corrosion induced energy emission.

12. Apparatus as claimed in claim 11 in which signal processing means responsive to the signals detected by the analyser is provided to process the filtered voltage signals to provide a quantity $V^2$ sec where V is the total signal voltage for its duration in seconds.

13. A method substantially as hereinbefore described with reference to the accompanying drawings.

14. Apparatus substantially as hereinbefore described with reference to the accompanying drawings.

## FIG.1A.

```
┌─────────────────────────┐
│  ACOUSTIC EMISSION      │──── 1
│     TRANSDUCER          │
└─────────────────────────┘
            │
┌─────────────────────────┐
│     PREAMPLIFIER        │──── 4
└─────────────────────────┘
            │
┌─────────────────────────┐
│        FILTER           │──── 5
└─────────────────────────┘
            │
┌─────────────────────────┐
│     MAIN AMPLIFIER      │──── 6
└─────────────────────────┘
            │
┌─────────────────────────┐
│     BUFFER STORE        │──── 7
└─────────────────────────┘
```

SIGNAL DETECTOR UNIT

MULTIPLEXER

8

2

FREQUENCY FILTERS

F —12    F —12    F

AMPLITUDE THRESHOLD FILTERS

A —13    A    13—A

DATA STORE

14    14    15

9    10    11

MULTIPLEXER    16

FIG. 1B.

SIGNAL
PROCESSING
UNIT

| LOW PASS FILTER | 17 |
| MULTIPLIER | 18 |
| SIGNAL AVERAGER | 19 |
| AMPLITUDE THRESHOLD DETECTOR | 20 |

CLOCK 21

| VOLTAGE CONTROLLED OSCILLATOR | 22 |
| COUNTER | 23 |
| MULTIPLEXER | 24 |

DISPLAY 25  DISPLAY 26  DISPLAY 27

FIG. 2.

(a)

(b)

(c)

(d)

(e)

(f)

0116765

FIG.3.

FIG.4.

0116765

FIG.5.

OXIDE MASS (GRAMMES)

TIME (MONTHS)

**0116765**

Application number

**EUROPEAN SEARCH REPORT**

European Patent
Office

EP 83 30 7629

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 946 600 (LOCKHEED AIRCRAFT CORP.)<br>* Figures 1, 3; column 2, line 17 - column 4, line 11; column 5, lines 45, 46 * | 1-3,5, 7-9,11 | G 01 N 29/00 /,<br>G 01 N 17/00<br>G 01 H 1/00 |
| | --- | | |
| A | ELECTRONIQUE INDUSTRIELLE, no. 27, February 1982, Paris E. CATIER "L'émission acoustique: un stéthoscope pour l'industrie", pages 63-69<br>* Page 65, last paragraph; page 67, paragraph 3 * | 1,2 | |
| | --- | | |
| A | ULTRASONICS, vol. 16, no. 3, May 1978, Guildford I. GRABEC "Application of correlation techniques for localization of acoustic emission sources", pages 111-115<br>* Figure 4; page 114, paragraph 1 * | 1 | |
| | --- | | **TECHNICAL FIELDS SEARCHED (Int. Cl. ³)** |
| A | TECHNICAL REVIEW, no. 2, February 1979, S borg T. LICHT "Acoustic emission", pages 3-41<br>* Figures 10-12; pages 15-21 * | 1-12 | G 01 H 1/00<br>G 01 N 17/00<br>G 01 N 29/00 |
| | ----- | | |

The present search report has been drawn up for all claims

| Place of search<br>BERLIN | Date of completion of the search<br>13-03-1984 | Examiner<br>DEVEZA R.R. |
|---|---|---|